# EUROPEAN PATENT SPECIFICATION

(11) **EP 3 837 940 B1**
(45) Date of publication and mention of the grant of the patent: **11.10.2023**
(21) Application number: 19218044.6
(22) Date of filing: 19.12.2019
(51) Int. Cl.: A01B 63/11, A01B 73/00

(54) **METHOD FOR CONTROLLING AN AGRICULTURAL MACHINERY**
VERFAHREN ZUR STEUERUNG EINER LANDWIRTSCHAFTLICHEN MASCHINE
PROCÉDÉ DE COMMANDE D'UNE MACHINE AGRICOLE

(43) Date of publication of application: 23.06.2021
(73) Proprietor: CNH Industrial Sweden AB, 590 96 Överum (SE)
(72) Inventor: HERTZOG, Daniel, 59376 Blackstad (SE); LINDERSON, Bengt Per-Inge, 594 94 Odensvi (SE); WALLIN, Per Dennis, 693 37 Västervik (SE); NILSSON, Carl Ola Fredrik, 59340 Västervik (SE); SVENSSON, Robert, 59095 Loftahammar (SE); NAHDIN, Rickard Karl Gustav, 59492 Gamleby (SE)
(74) Representative: CNH Industrial IP Department

(56) References cited:
- EP-A1- 0 433 669
- EP-A1- 3 513 640
- US-A- 4 667 744
- US-A1- 2018 162 462

## Description

### Background of the Invention

The present disclosure relates to a method for controlling an agricultural machinery, particularly, but not exclusively, an agricultural plough, during transport. Other aspects of the present disclosure relate to an agricultural machinery, particularly, but not exclusively, an agricultural plough.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern plough implements typically include a plurality of plough bodies connected to a plough frame such that they are laterally offset manner from each other when the plough is in use. Each plough body is connected to the plough frame via corresponding beams. The plough frame, in turn, is connected to an agricultural vehicle for towing or pushing the plough implement via a hitch arranged at a front or back end of the frame.

The plough implement may be transferable between two or more positions. In an operating position, the plough implement may be positioned with respect to the agricultural vehicle such that the ground engaging tools of the plough penetrate the soil of the work area at a desired working depth. In a transport position, the plough implement may be positioned such that ground engaging tools are lifted off the ground. The transport position may be used to transport the agricultural implement to and from the work area, often on public roads. The plough implement may be hydraulically movable with respect to the agricultural vehicle between the transport position and the operating position.

Particularly in fully-mounted ploughs, the plough implement may be lifted above the road surface by the agricultural vehicle with no part of the plough implement being in contact with the road surface. The significant weight of the plough implement, therefore, rests entirely on the agricultural vehicle, creating stress that is substantially amplified by forces created due to changes in speed and/or direction during transport. These forces created during transport may result in instability and/or increased wear.

In view of the above, there is generally a need for an improved method for controlling an agricultural machinery during transport.

It is an aim of the present disclosure to solve or at least ameliorate one or more problems of the prior art.

US4667744A describes a vehicle, such as a tractor, having an attachment implement, such as a plow. An automatic controller acts upon a power lift of the plow, which moves the plow during operation in trenching position.

Document EP 3 513 640 A1 describes a method for eliminating a driving-related vibration input from an attachment 18, for example a plow, which is attached to a three-point linkage of an agricultural tractor 12. By changing the damping characteristics of a first adjustment arrangement 46, a horizontal degree of freedom 32 and by changing the damping characteristics of a second adjustment arrangement 46, a vertical degree of freedom 30 for right and left lower links 22r, 22l of the three-point linkage can be adjusted such that on the agricultural tractor 12 and/or or attachment 18 occurring yawing, pitching and / or rolling movements are at least partially compensated. The horizontal and/or vertical degree of freedom is preferably only adjusted by changing the damping characteristics of the first and/or second adjusting arrangement if it is determined that the attachment is in a raised transport position.

### Summary of the Invention

Aspects and embodiments of the disclosure provide a method for controlling an agricultural machinery and an agricultural machinery as claimed in the appended claims.

According to one aspect of the present disclosure, there is provided a method for controlling an agricultural implement during transport according to claim 1, the agricultural implement comprising a plurality of implement tools and at least one actuator for moving one or more of the plurality of implement tools, wherein the method comprises: determining a present or future change in the agricultural implement's speed and/or direction of motion; determining an actuator-control-signal based on the determination of a present or future change; and automatically activating an operation of the at least one actuator, if a present or future change in the agricultural implement's speed and/or direction is determined.

The at least one actuator may be a hydraulic actuator.

In an embodiment of the present disclosure, the agricultural implement is a plough implement comprising a frame, and wherein the plurality of implement tools are ground engaging tools, such as a plurality of plough bodies connected to the frame.

The at least one actuator may be configured to move one or more of the plurality of plough bodies relative to the frame.

In yet another embodiment, the at least one actuator is one or more of: a plough-width-adjustment actuator for moving the plough bodies in a lateral direction; a depth-adjustment actuator for adjusting the working depth of one or more of the plurality of plough bodies; a stone-trip actuator for biasing the plurality of plough bodies into a predetermined working position; a roll-over actuator for reversing the agricultural implement; and/or a first-furrow-adjustment actuator.

Determining the actuator-control-signal may comprise: determining a quantity of change in the agricultural implement's speed and/or direction of motion; determining the actuator-control-signal based on the quantity of change.

In another embodiment the agricultural implement comprises a plurality of actuators for moving one or more of the plurality of ground engaging tools, wherein determining the actuator-control-signal comprises: identifying one or more of the plurality of actuators suitable for damping the movement of the agricultural implement on the basis of the change in the agricultural implement's speed and/or direction of motion; and for each of the identified actuators, determining an actuator-control-signal required to dampen the change in the agricultural implement's speed and/or direction of motion, on the basis of the quantity of change.

According to another embodiment determining a present or future change in the agricultural implement's speed of motion or direction of motion comprises: receiving travel-data associated with route parameters and/or operating parameters of an agricultural vehicle moving the agricultural implement; determining a present or future change in the agricultural implement's speed and/or direction of motion on the basis of the travel-data.

At least a part of the travel-data may comprise stored data obtained from a memory device.

At least a part of the travel-data may comprise live-data obtained from sensors.

The travel-data may comprise vehicle-data associated with operational parameters of the agricultural vehicle.

According to yet another embodiment the vehicle-data is indicative of one or more of: travel speed of the agricultural vehicle; inclination of the agricultural vehicle; location of the agricultural vehicle; gear changes of the agricultural vehicle; position and/or actuation of a brake pedal of the agricultural vehicle; position and/or actuation of a gas pedal of the agricultural vehicle; position and/or actuation of a clutch pedal of the agricultural vehicle.

The travel-data may comprise map-data associated with characteristics of a route along which the agricultural implement is being moved.

According to another aspect of the present disclosure, there is provided an agricultural implement according to claim 13 comprising: a plurality of ground engaging tools; at least one actuator for moving one or more of the plurality of ground engaging tools, wherein the agricultural implement is associated with a control unit for controlling an agricultural implement during transport, the control unit configured to: determine a present or future change in the agricultural implement's speed and/or direction of motion; determine an actuator-control-signal based on the determination of a present or future change; activate the at least one actuator on the basis of the actuator-control-signal.

The agricultural implement may be a fully-mounted agricultural implement.
According to another aspect of the present disclosure, there is provided an agricultural machinery comprising the above agricultural implement and an agricultural vehicle for transporting the agricultural implement. There may be provided a computer program, which when run on a computer, causes the computer to configure any apparatus, including a control unit, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

The agricultural work vehicle (or tractor) may include one or more control devices, such as but not limited to programmable or non-programmable processors. Similarly, the plough implement may include one or more control devices, such as but not limited to programmable or non-programmable processors. Additionally, or alternatively, the plough implement may be controlled by one or more control devices of the agricultural work vehicle. Similarly, the agricultural work vehicle may be controlled by one or more control devices of the plough implement.

The agricultural work vehicle and/or the plough implement may be remote controlled, e.g. from a farm office. Accordingly, the agricultural work vehicle may include one or more communication interfaces for connection to a remote processor and/or a remote controller. Similarly, the plough implement may include one or more communication interfaces for connection to a remote processor and/or a remote controller.

### Brief Description of the Drawings

One or more embodiments of the present disclosure will now be described by way of example only, with reference to the accompanying drawings, in which:
Figure 1A shows a right-side view of a plough implement with fixed ground engaging tools;
Figure 1B shows a left-side view of the plough implement shown in Figure 1A;
Figure 1C shows a plan view of the plough implement shown in Figure 1A;
Figure 2 shows a schematic plan view of an agricultural machinery in its operating position;
Figure 3 shows a schematic representation of a system for controlling an agricultural implement;
Figure 4 shows a schematic representation of an agricultural machinery during transport;
Figure 5 shows a schematic representation of an agricultural machinery during transport;
Figure 6 shows a schematic flow chart of a method according to an embodiment of the present disclosure;
Figure 7 shows a schematic flow chart of a method according to an embodiment of the present disclosure.

### Detailed Description of the Drawings

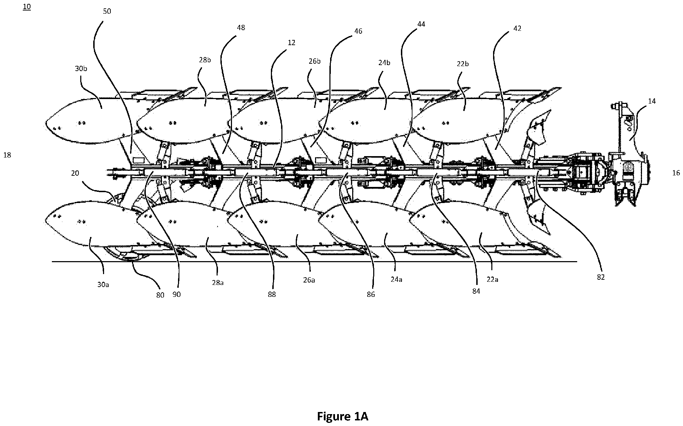

Figures 1A to 1C show various views of an agricultural implement, particularly a plough implement 10. It will be understood that the plough implement is just one example of an agricultural implement covered by the present disclosure. Other agricultural implements include cultivator implements, mower implements, tedder implements, seeder implements, etc. As will be described in more detail below, the plough implement 10 shown in Figures 1A to 1C is a reversible plough.

The plough implement 10 comprises a main frame 12. The main frame 12 may be a rectangular or round tube extending between a headstock 14 at a front end 16 of the plough towards a plough wheel 20 at a rear end 18 of the plough. The main frame 12 supports a variety of implement tools (in this case ground-engaging tools).

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the beams 42, 44, 46, 48, and 50 of the plough 10 shown in Figures 1A to 1C includes a hydraulic stone-trip mechanism. To this end, each of the Y-shaped beams 42, 44, 46, 48, 50 is pivotable with respect to the main frame 12 about pivots of a corresponding beam housing such that each of the beams 42 to 50 can pivot their respective plough bodies 22a, 22b, 24a, 24b, 26a, 26b, 28a, 28b, 30a, 30b out of the soil, when the latter hits a subterranean obstacle, such as a stone buried in the soil. To avoid pivotal movement of the beams 42, 44, 46, 48, 50 and thus also a withdrawal of the corresponding plough bodies 22a to 30b from the soil during normal operation, i.e. when no subterranean obstacle is encountered, the beams are biased into a working position (horizontal position shown in Figure 1A) by means of hydraulic actuators 82, 84, 86, 88, and 90. Depending on the hydraulic pressure within hydraulic actuators 82 to 90, a bias-force is applied to the beams 42 to 50 biasing the beams into their working position (horizontal position in Figure 1A). A pivotal movement of the beams 42 to 50 is only possible if the bias-force of the hydraulic actuators 82 to 90 is overcome by a drag-force experienced by the plough bodies 22a to 30b working the soil. The bias-force of the hydraulic actuators 82 to 90 is adjusted such that the drag-force experienced by the plough bodies 22a to 30b is only overcome if significant obstacles are encountered.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough implement 10 through a field creates five adjacent furrows.

A first mounting rail 52 supports a first pair of skimmers 32a, 32b. A second mounting rail 54 supports a second pair of skimmers 34a, 34b. A third mounting rail 56 supports a third pair of skimmers 36a, 36b. A fourth mounting rail 58 supports a fourth pair of skimmers 38a, 38b. A fifth mounting rail 60 supports a fifth pair of skimmers 40a, 40b. The skimmers 32a, 32b, 34a, 34b, 36a, 36b, 38a, 38b, 40a, 40b and/or their respective mounting rails 52, 54, 56, 58, 60 may be adjustable with respect to the main frame 12 to change the distance between the skimmers 32a, 32b, 34a, 34b, 36a, 36b, 38a, 38b, 40a, 40b and the main frame 12. In one example, the skimmers 32a, 32b, 34a, 34b, 36a, 36b, 38a, 38b, 40a, 40b may be movable up and down towards and away from the main frame 12 to individually adjust the working depth of each of skimmers 32a, 32b, 34a, 34b, 36a, 36b, 38a, 38b, 40a, 40b. The skimmers 32a, 32b, 34a, 34b, 36a, 36b, 38a, 38b, 40a, 40b may either be manually or automatically adjustable.

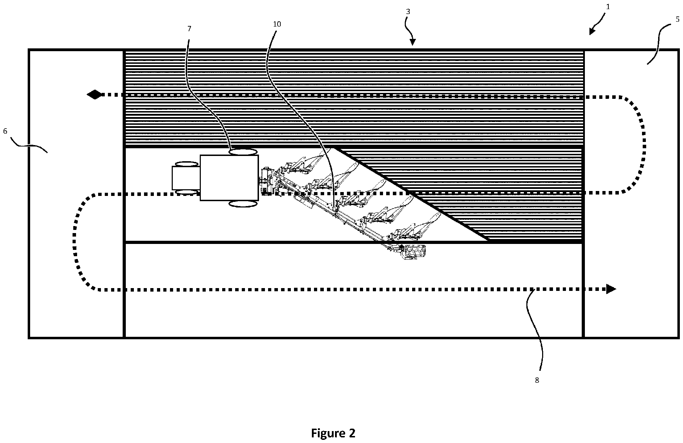

Turning to Figure 2, a typical operation of an agricultural machinery comprising an agricultural vehicle 7 and a plough implement 10 is described. In use, the plough implement 10 is drawn as an attachment (implement) behind the agricultural towing vehicle 7 (e.g. an agricultural vehicle). It will be appreciated that it is equivalently feasible to locate the plough implement 10 in front of or both in front of and behind the agricultural vehicle 7.

Figure 2 shows a schematic work area 1, e.g. a crop field, which is divided into a main field 3 and headlands 5,6. A agricultural vehicle 7 draws the plough implement 10 across the main field 3 in generally parallel working rows. The working rows are part of the trajectory 8 of the agricultural vehicle 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the agricultural vehicle 7 and plough implement 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough implement 10 reaches the headlands 5 or 6 respectively. Once the agricultural vehicle 7 and the corresponding plough implement 10 have turned on the headland 5, 6, the ground engaging tools of the plough implement 10 are, again, lowered towards an operating position to engage the soil of the main field 3.

In the illustration of Figure 2, the plough implement 10 is working on the main field 3 and, therefore, is arranged in the operating position. As the plough implement 10 reaches the border between the headland 5/6 and the main field 3, the plough implement 10 is transferred to a headland/transfer position. It follows that each working row starts with an adjustment of the plough from the transfer position into the operating position and ends with an adjustment of the plough from the operating position into the transfer position.

The plough implement 10 shown in Figures 1A to 1C is of the fully-mounted type. In fully-mounted ploughs, the weight of the plough is carried exclusively by the agricultural vehicle when the plough is in its transfer position (on the headlands). In other words, the plough is then exclusively supported by the agricultural vehicle 7 via headstock 14 and may be lifted off the ground with a lift cylinder of a tractor linkage.

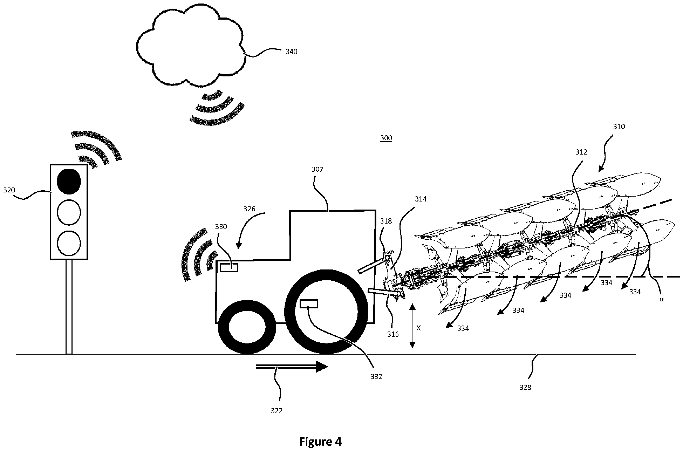

During the turning movement on the headlands, the plough implement 10 is also reversed. That is, the main frame 12 is rotated by 180 degrees with respect to the headstock 14 to move the plough from a first configuration to a second configuration. It will be appreciated that if the operator is ploughing in the furrow (as shown in Figure 4), then the main frame 12 may not be rotated by exactly 180 degrees, it is more likely to be 190-200 degrees or 160-170 degrees depending on which direction the main frame 12 turns. If operator is ploughing on-land, then the main frame 12 may be rotated by an angle that is closer to 180 degrees, perhaps exactly 180 degrees.

In its first configuration shown in Figures 1A to 1C, the plough implement 10 is set up such that the plurality of first ground engaging tools, i.e. plough bodies 22a, 24a, 26a, 28a, and 30a and skimmers 32a, 34a, 36a, 38a, 40a, of each of the pairs are in contact with the soil. This first configuration is shown in Figure 2 and sometimes also referred to as the "left side configuration", since most of the plough bodies are arranged to the left of agricultural vehicle 7. In its second configuration (not illustrated), the plough implement 10 is set up such that the plurality of second ground engaging tools, i.e. plough bodies 22b, 24b, 26b, 28b, 30b and skimmers 32b, 34b, 36b, 38b, 40b, are in contact with the soil. This second configuration is achieved after rotating the main frame by 180 degrees, such that the majority of plough bodies are then located to the right of the agricultural vehicle (not shown). The second configuration is, therefore, also sometimes referred to as the "right side configuration".

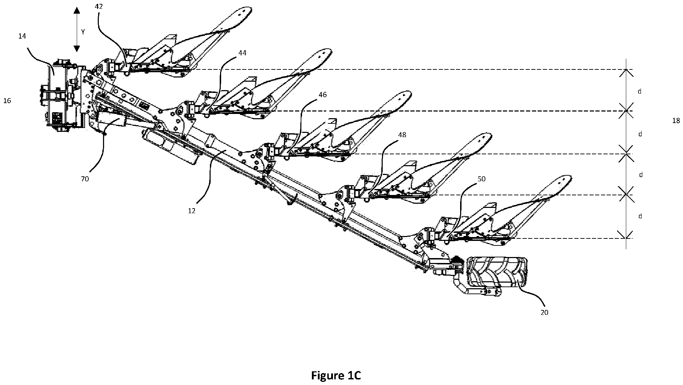

Tilling the field with the plough implement 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C. The lateral distance d between the plough bodies may be adjusted by a plough-width-adjustment-actuator 70, which in this embodiment is a hydraulic cylinder. The plough-width-adjustment actuator 70 is configured to change the angle of the main frame 12 with respect to the direction of travel. It will be understood that the lateral distance d between the plough bodies 22a, 22b, 24a, 24b, 26a, 26b, 28a, 28b, 30a, 30b generally increases when the angle is increased and vice versa. Moreover, the lateral position of the main frame 12 may be adjusted by means of a first-furrow-adjustment actuator (not shown), which may be used to shift the main frame and thus the plough bodies 22a, 22b, 24a, 24b, 26a, 26b, 28a, 28b, 30a, 30b laterally, in a direction Y shown in Figure 1C, with respect to the headstock 14.

As the reversible plough implement 10 reaches the end of the first run, the main frame 12 is rotated by 180 degrees (reversed) with respect to the headstock 14. A turning cylinder (not shown), attached to the headstock 14 may be used to rotate (reverse) the plough implement 10. During rotation of the main frame, the first plurality of plough bodies, e.g. 22a, 24a, 26a, 28a, 30a, are transferred to the top of the plough implement 10. At the same time, the second plurality of plough bodies e.g. 22b, 24b, 26b, 28b, 30b, which were not in use in the previous run, is then transferred to the lower end of the plough implement 10 and will be submerged in the soil during the next run. The reversible plough is then in its second configuration (not shown).

Executing a second run of the field with the plough implement 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough implement 10 between consecutive runs has the advantage that the plough bodies 22a, 22b, 24a, 24b, 26a, 26b, 28a, 28b, 30a, 30b that engage the soil always face the same side edge of the main field 3, irrespective of the agricultural vehicle's orientation.

In both configurations of the plough implement 10 the main frame 12 is supported by an implement wheel 20. The implement wheel 20 is arranged at the back end 18 of the plough implement 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. To this end, the plough 10 shown in Figures 1A to 1C includes implement wheel 20, which acts as a depth wheel to adjust the ground clearance of the main frame 12. A linkage 62 provided between the implement wheel 20 and the main frame 12 allows the operator to lift or lower the main frame 12 with respect to a ground surface 80. The linkage 62 may be connected to an actuator, e.g. a hydraulic cylinder (not shown), for adjusting the distance between the implement wheel 20 and the main frame, thereby lifting and lowering the main frame. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the main frame 12, any change in the main frame's ground clearance will also affect the working depth of the plurality first and second ground engaging tools. In particular, if the main frame 12 is lowered by shortening the linkage 62 between implement wheel 20 and the main frame 12, then the working depth of the plurality of first ground engaging tools shown in Figures 1A to 1C is increased, i.e. the plurality of first ground engaging tools are lowered further into/towards the soil. If, on the other hand, the main frame 12 is lifted, by extending the linkage 62 between implement wheel 20 and the main frame 12, then the working depth of the plurality of first ground engaging tools is decreased, i.e. the plurality of first ground engagement tools are either raised or completely pulled out of the soil. It will be appreciated that extending and retracting the linkage 62 will mainly raise or lower the back end of the plough implement 10. In order to evenly raise the front and the back end of the plough implement 10, the headstock 14 may be raised or lowered together with an adjustment of the linkage 62 of the implement wheel 20. Raising or lowering the headstock may be achieved by means of hydraulic cylinders connected to lifting arms of the agricultural work vehicle that carry the headstock 14.

In order to transfer the agricultural machinery between a garage (or any other storage facility) and the work area 1 or between distant work areas, the plough implement also has a transport position. Similar to the headland/transfer position, all of the ground engaging tools of the plough implement 10, such as the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are lifted off the ground by the agricultural vehicle, in the transport position. In particular, the plough implement may be lifted off the ground by a pair of lifting arms and/or a top-link connecting the agricultural vehicle 7 to the headstock of the plough implement 10. The present disclosure is concerned with systems and methods for controlling an agricultural machinery during transport, i.e. when the agricultural machinery is driven to and from the work areas.

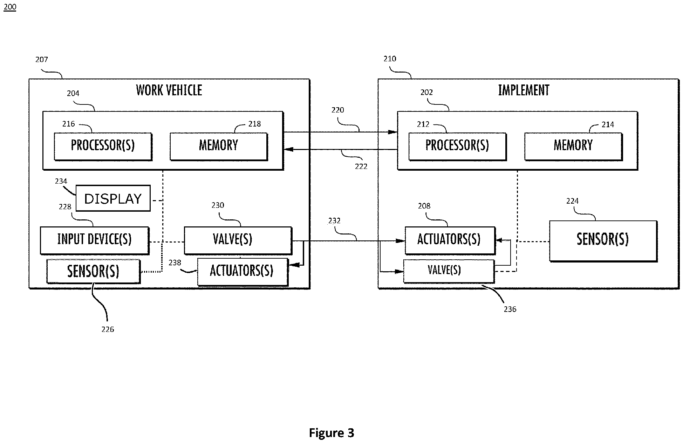

Referring to Figure 3, there is shown a schematic view of an embodiment of a system 200 for controlling an agricultural machinery during transport. The system may be used for controlling an agricultural machinery comprising an agricultural vehicle 207 (e.g. a tractor or other work vehicle) and an agricultural implement 210 (e.g. a plough implement). The system 200 may include a control unit 202 installed on and/or otherwise provided in connection with the agricultural implement 210. In some embodiments, the system may additionally or alternatively include a control unit 204 which is associated with the agricultural vehicle 207. The control unit 202 associated with the agricultural implement 210 and/or the control unit 204 associated with the agricultural vehicle 207 may be capable of electronically controlling the operation of one or more actuators 208 of the agricultural implement 210. Similarly, either the control unit 202 of the implement or the control unit 204 of the agricultural vehicle 207 may be capable of controlling operation of one or more components, such as one or more actuators 238, of the agricultural vehicle 207.

The control unit 202 that is associated with the agricultural implement 210 may include one or more processors 212 associated with one or more memory devices 214. Similarly, the control unit 204 associated with the agricultural vehicle 207 may include one or more processors 216 connected to one or more memory devices 218. The control unit 202 of the agricultural implement 210 and the control unit 204 of the agricultural vehicle 207 may communicate with each other as indicated by arrows 220, 222. For example, the control unit 204 of the agricultural vehicle 207 may communicate with control unit 202 of the agricultural implement 210 via communication line 220 to forward data determined by a vehicle sensor(s) 226 or forward direct commands of the operator entered via one or more input devices 228.

The control unit 204 of the work vehicle 207 may be connected to one or more valves 230, such as hydraulic valves. The valves 230 may be part of a hydraulic system (not shown) located on the agricultural vehicle 207. By controlling the valves 230, the control unit 204 may control a hydraulic fluid supply from a hydraulic fluid source towards the actuators 238 (in this case hydraulic actuators) of the agricultural vehicle 207 and/or towards the actuators 208 of the agricultural implement 210 (via fluid lines 232). Similarly, the control unit 202 of the agricultural implement 210 may be connected to one or more valves 236 that are attached to the agricultural implement 210. By controlling the valves 236, the control unit 202 may further control a hydraulic fluid supply to individual actuators 208 of the agricultural implement 210. The control unit 204 of the agricultural vehicle 207 may be directly connected to the valves 236 or it may be connected to the valves 236 via the control unit 202 of the agricultural implement 210. Again, it should be appreciated that generally only a single control unit 202 or 204 may be required to control both the agricultural implement 210 and the agricultural vehicle 207 together with their corresponding hardware. The control units 202, 204 may also be located remotely from both the agricultural vehicle 207 and the agricultural implement 210. It will also be understood that the actuator(s) 208, 238 of the agricultural machinery may be actuated in various different ways (e.g. pneumatically or mechanically) and are thus not limited to hydraulic actuators described above.

The one or more actuators 208, 238 may be part of mechanisms for moving various parts of the agricultural implement 210 or the entire agricultural implement 210 with respect the agricultural vehicle 207. In one example, the one or more actuators 238 of the agricultural vehicle may correspond to a hydraulic actuator associated with a top-link (Figure 4) of the agricultural vehicle 207 and/or hydraulic actuators connected to lifting arms (Figure 4) of the agricultural vehicle 207. Accordingly, the actuators 238 may be used for moving the entire agricultural implement 210 with respect to the agricultural vehicle 207, depending on an input from either one of the control units 202, 204. The one or more actuators 208 of the agricultural implement 210 may correspond to hydraulic actuators for setting different parameters of the agricultural implement 210. For example, the one or more actuators 208 of the agricultural implement 210 could be associated with movements of the main frame 12, such as the plough-width-adjustment-actuator 70 shown in Figure 1C. Additionally, or alternatively, the one or more actuators 208 could include working-depth-adjustment-actuators (not shown), stone-trip-adjustment-actuators (not shown), and generally any other hydraulic or electric actuator of the agricultural implement.

The control unit 202 of the agricultural implement and/or the control unit 204 of the agricultural vehicle 207 are capable of automatically controlling an operation to adjust a position of the plough implement 210 with respect to the agricultural vehicle 207. In this specification, the term "automatically controlling" refers to the ability of the control units 202 and/or 204 to adjust the position of the agricultural implement 210, during transport, independent of an operators' input. Rather, the control units 202, 204 are configured to receive travel-data indicative of route parameters and/or operating parameters of the agricultural vehicle during transport and control the one or more actuators depending on a likelihood of a change in the agricultural implement's speed and/or direction of motion derived from the travel-data. The travel-data received by the control unit 202 of the agricultural implement 210 and/or the control unit 204 of the agricultural vehicle 207 may be provided by various sources.

In one embodiment, one or more sensors 224 of the agricultural implement 210 and/or one or more sensors 226 of the work vehicle 207 may be used to determine live travel-data associated with the operation of the agricultural vehicle 207 and/or live-data associated with traffic conditions on along the transport route of the agricultural machinery. To this end, the sensors 224, 226 may include a variety of different sensor types for determining various live-data.

In one example, the one or more sensors 226 of the agricultural vehicle 207 may include optical sensors for determining traffic-data. For example, the optical sensors can be used to monitor the direction and speed of travel of other vehicles in the vicinity of the work vehicle 207. In one embodiment, the sensors may be distance sensors, which together with speed sensors of the agricultural vehicle 207 may be used to determine the speed and distance of vehicles in front of the agricultural work vehicle 207. Optical sensors may alternatively be used to detect the presence of temporary obstacles, such as road works or parked cars, and/or the presence of pedestrians on the route of the agricultural vehicle 207. Other sensors on the agricultural vehicle 207 may include inclination sensors to determine the gradient of the current ground surface, on which the agricultural vehicle 207 is travelling.

The one or more sensors 226 on the agricultural vehicle 207 may alternatively or additionally be configured to determine vehicle-data associated with operational parameters of the agricultural vehicle. For example, the vehicle-data determined by the one or more sensors 226 of this embodiment may include data associated with the speed and the location of the work vehicle, gear changes of the agricultural vehicle, position and/or actuation of any of the operator's pedals, such as the brake pedal, the gas pedal, or the clutch pedal. Some or all of the exemplary vehicle-data parameters may be used alone or in combination with each other to identify or predict a braking event of the agricultural vehicle.

The one or more sensors 224 of the agricultural implement 210 may include various sensors to determine the current position of the agricultural implement 210 with respect to the agricultural vehicle 207. In one example, the one or more sensors 224 may comprise a level sensor to determine an angle of the main frame of the agricultural implement 210 with respect to the road surface. Other examples may include displacement sensors for determining the angle of the main frame in a lateral direction.

Turning to Figure 4, there is shown a schematic of an agricultural machinery in its transport configuration. The agricultural machinery 300 of Figure 4 comprises an agricultural vehicle 307 and an agricultural implement 310. The agricultural implement 310 may be a plough implement, such as the plough implement 10 shown in Figures 1A to 1C. The agricultural implement 310 is connected to the rear of the agricultural vehicle 307 via its headstock 314. In particular, a lower end of the headstock 314 is connected to a pair of lifting arms 316 (only one lifting arm is illustrated). An opposite, upper end of the headstock 314 is connected to a top link 318. Both the pair of lifting arms 316 and the top link 318 may include hydraulic actuators. The hydraulic actuators of the lifting arms 316 may be used to change the vertical position of the agricultural implement 310 as indicated by arrow X. The one or more hydraulic actuators of the top link 318 may be used to change an angle α of the main frame 312 with respect to the horizontal direction.

Figure 4 illustrates a situation, in which the agricultural vehicle 307 approaches a traffic light 320, which is in a "red" state. Due to the presence of the red traffic light 320, the agricultural vehicle 307 will decelerate as indicated by the arrow 322. As will be appreciated, deceleration of the agricultural vehicle 307 will also affect the agricultural implement 310. The inertia of the agricultural implement 310 will try to maintain movement of the agricultural implement 310 in the direction of travel, causing a momentum that will be transferred onto the agricultural vehicle 307 via the headstock 314 and cause additional weight on the front suspension of the agricultural vehicle as indicated by arrow 326. In fast braking operations, the momentum 324 will be particularly high, therefore possibly causing damage to the agricultural vehicle suspension or even causing the rear wheels of the agricultural vehicle 307 to lift off the road surface 328.

To prevent excessive momenta to be transferred from the agricultural implement 310 onto the agricultural vehicle 307, the present method suggests to automatically activating an operation of at least one of the existing actuators of the agricultural implement 310.

In the example of Figure 4, the agricultural machinery may include a variety of sensors or receivers that may be used to determine a present or future braking event/deceleration explained above. In one example, the agricultural vehicle 307 may include a velocity/acceleration sensor 332. The velocity/acceleration sensor may be used by a control unit (not shown) to determine a present change in the agricultural implement's speed. In the example of Figure 4, the velocity/acceleration sensor 332 may be used to identify the presence of a braking/deceleration event due to the red traffic light 320. Alternatively, a brake pedal sensor (not shown) may be used to identify that a braking/deceleration event is in process in front of the traffic light 320.

In another example, the agricultural vehicle 307 may include an optical sensor 330 for identifying traffic signals, such as the "red" status of the traffic light 320 ahead of the agricultural vehicle 307. The sensor 330 may detect the status of the traffic light 320 before the operator activates the brakes of the agricultural vehicle 307. The status of the traffic light 320 may then be transferred to a control unit of the agricultural machinery 300, which, for example together with the speed of the agricultural vehicle 307, may predict a future braking event.

If the breaking event of Figure 4 is observed or predicted by the control unit, the control unit may activate one or more of the above actuators of the agricultural implement 310 to try and reduce an expected impact of the inertia of the agricultural implement 310 during the braking event.

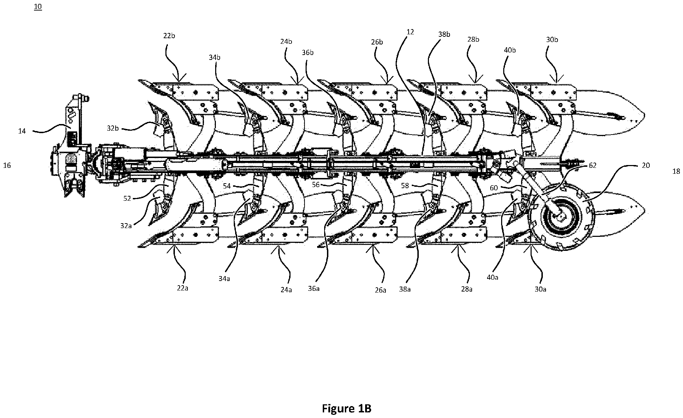

In the example of Figure 4, the agricultural implement 310 is a plough implement and so the control unit of the agricultural machinery 300 may activate at least one actuator for moving one or more of the plurality of ground engaging tools (e.g. the plough bodies or the skimmers). A non-exhaustive list of examples of available plough implement actuators includes:
A plough-width-adjustment actuator (70, Figure 1C) for moving the plough bodies in a lateral direction;
A depth-adjustment actuator for adjusting the working depth of one or more of the plurality of plough bodies. This could be the hydraulic cylinder connected to the linkage 62 provided between the implement wheel 20 and the main frame 12, shown in Figure 1B. Alternatively, this could be hydraulic actuators arranged between the plough bodies and the main frame to individually adjust a distance between the plough bodies and the main frame;
A stone-trip actuator for biasing the plurality of plough bodies into a predetermined working position (e.g. parallel with the main frame of the plough implement). Such hydraulic, stone-trip actuators are shown in the example of Figure 1A and labelled with reference signs, 82, 84, 86, 88, and 90; and
A roll-over actuator for reversing the agricultural implement. Although not specifically derivable from any of the Figures, such a roll-over actuator may be a hydraulic cylinder arranged on the headstock of the agricultural implement and suitable for transferring (i.e. reversing) the reversible plough implement between its first and its second configuration described above.

Turning back to the braking event example of Figure 4, the control unit may reduce the biasing force of the stone-trip actuators when a braking event is detected or predicted. The control unit may reduce the biasing force up to a point at which the weight of the plough bodies and their corresponding beams is sufficient to cause a pivoting movement of the plough bodies towards the road surface 328, as indicated by arrows 334 in Figure 4. It will be appreciated that changing the position of the plough bodies will not change the inertia of the agricultural implement 310 but it will change the centre of gravity of the agricultural implement 310 and can thus reduce the effect on the agricultural vehicle 307. A lowered centre of gravity will redirect the momentum of the agricultural implement 310 mainly in the direction of travel, such that the additional weight on the front suspension of the agricultural vehicle 307, indicated by arrow 326, is minimised. This will not only increase the comfort of the operator during the braking event but can also increase the service life of various components of the agricultural machinery 300, such as the agricultural vehicle suspension.

In another variant, the control unit may alternatively or additionally extend the hydraulic actuator of the top link 318 to reduce the angle α when a braking event is detected or predicted. It will be appreciated that changing the angle α of the agricultural implement will not change the inertia of the agricultural implement 310 but it can reduce the effect on the agricultural vehicle 307. In this example, a lowered agricultural implement 310 will transfer the momentum of the agricultural implement 310 mainly in the direction of travel, such that the additional weight on the front suspension of the agricultural vehicle 307, indicated by arrow 326, is minimised.

In one embodiment, the control unit may not change the position of the agricultural implement 310 with respect to the agricultural vehicle 307, even if a breaking event is detected or predicted. Rather, in this embodiment, the control unit may further consider a determined quantity of change in the agricultural implement's speed and/or direction of motion. In other words, if the control unit determines signs to suggest that the agricultural vehicle 307 will be decelerated slowly and continuously, there may not be a need for a readjustment of the ground engaging tools of the agricultural implement 310. In the scenario of Figure 4, the control unit may, for example, determine a quantity of change (e.g. a deceleration) of very few m/s² and decide not to change the position of the agricultural implement.

In the illustration of Figure 4, there is also shown another example of a communication between the agricultural machinery 300 and the traffic light 320. In particular, the status information of the traffic light 320 may be provided to the agricultural vehicle directly by the traffic light 320. The traffic light 320, which, in this example, is a smart traffic light, communicates with the control unit of the agricultural machinery 300 wirelessly, for example via a cloud system 340 to transfer status-data. Alternatively, the status-data may be received by the agricultural machinery from a central control server that controls some or all of the traffic light signals along the transport route of the agricultural vehicle. The agricultural machinery may, therefore, be able to determine accurately whether the traffic light will be reached during a "green" phase or a "red" phase, which helps in determining the likelihood of a future braking event. In this example, the optical sensor 330 on the agricultural vehicle 307 may not be required or only be required for verification purposes.

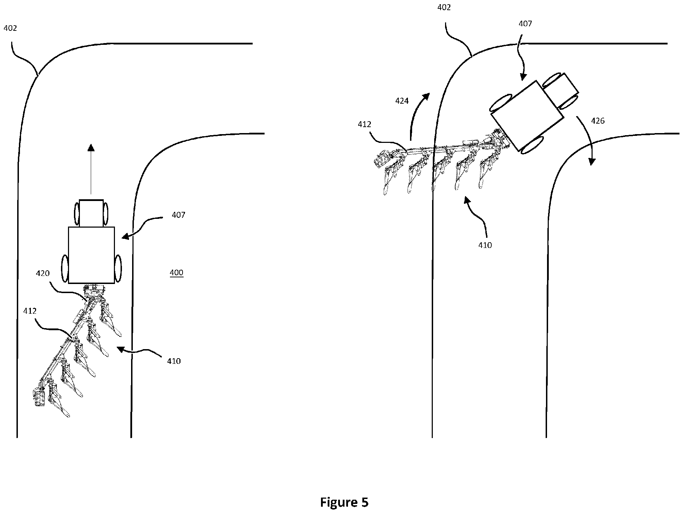

It will be appreciated that the present disclosure is also not restricted to braking events alone. Rather, the present disclosure relates to a method that predicts any change in the agricultural implement's speed and/or direction of motion during transport or indeed during field operation (e.g. on uneven soil) and the corresponding change of the position of the agricultural implement's ground engaging tools to minimise the impact of the detected change in speed and/or direction of motion. In one example the method may include detecting change in the ground surface of the field during operation (e.g. the start of a slope), which may result in a change of speed (e.g. a deceleration event). Following such a change in landscape on the field, the method may pro-actively change the agricultural implement's position accordingly. Figure 5 shows an embodiment, in which the agricultural machinery navigates a corner during transport. On the left of Figure 5, the agricultural machinery 400 is approaching a right-hand turn. The agricultural vehicle 407 is, therefore, likely to decelerate, this may be used by the control unit to more favourably rearrange the position of the ground engaging tools of the agricultural implement 410 with respect to the agricultural vehicle 407 when, or even before, the deceleration event occurs.

On the right-hand side of Figure 5, the agricultural machinery 400 is navigating the corner 402. As the agricultural vehicle 407 begins to turn, the inertia of the agricultural implement 410 creates a momentum 424 trying to rotate the agricultural vehicle 407 in the direction of arrow 426. This momentum 424 is caused by the agricultural implement's change in direction and may result in increased wear of the components of the agricultural vehicle 407, for example the tyres. Furthermore, the momentum 424 may introduce instability during cornering.

In order to reduce the effect of the momentum 424 created by the agricultural implement 410 during cornering, the control unit may adjust the position of the agricultural implement 410 (and thus of its ground engaging tools) with respect to the agricultural vehicle 407 when a cornering event is detected or predicted. In other words, when the control unit determines a current or future change of the agricultural implement's direction of motion, due to the road corner 402, the control unit may operate at least one of the above actuators of the agricultural implement to move the ground engaging tools of the agricultural implement automatically. In one example, the control unit may adjust the plough-width-adjustment actuator 420 thereby moving the main frame 412 and the corresponding plough bodies in a lateral direction to counteract the momentum 424.

In the embodiment of Figure 5, the control unit may be provided with map-data in order to predict a change in direction of motion of the agricultural implement 410. The map-data may be stored in a memory device of the control unit. In one example, the map-data may include the bends, turns or corners along the route of the agricultural machinery 400. It follows that, together with the current location and the speed of the agricultural vehicle 407, the control unit may use the map-data to determine when a change of direction of the agricultural implement 410 will likely occur. Once the likelihood for the turn shown in Figure 5 exceeds a predetermined threshold, the control unit may change the position of the agricultural implement 410 with respect to the agricultural vehicle 407 in anticipation of said change in direction.

It will be appreciated that various kinds of travel-data may be used to determine a present or future change in the agricultural implement's speed and/or direction of motion. Non-exclusive examples of travel-data received by the control unit and corresponding changes in the agricultural implement's speed and/or direction of motion are set out below:
Traffic-data associated with the location and/or speed of other vehicles on the road. This may be live-data received by sensors, such as the optical sensor described with reference to Figure 4 or it could be live-data received from an online traffic data database. In one embodiment, the agricultural vehicle may communicate with other vehicles within a certain radius to share location and/or speed data for identification of changes in traffic flow. In one example, this traffic-data may be used to identify traffic jams, parked vehicles or the general flow of traffic. It will be appreciated that a traffic-data indicating, e.g., fast reduction of speed in vehicles in front of the agricultural machinery may be used to predict a future braking event;
Traffic-data including the presence of temporary obstacles on the route. This may be live-data received by sensors, such as the optical sensor described with reference to Figure 4 or it could be live-data received from an online traffic data database. Such temporary obstacles may be temporary road works or temporary traffic lights that will affect the speed and direction of travel of the agricultural machinery. For example, information about temporary road works along the route will inform the control unit of a potential future change in direction and/or a future breaking event;
Traffic-data associated with the presence of pedestrians on the route. This may be detected by a sensor and forwarded to the control unit as traffic-data. If the pedestrians are likely to cross the path of the agricultural machinery, then the likelihood of a breaking event and/or an evasion movement increases significantly;
Traffic-data including status updates of traffic lights along the route. This traffic status may also include a time until the next green or red phase is to be expected. Depending on the speed of travel of the agricultural vehicle, the control unit may determine whether the next traffic light is reached during a green-phase or a red-phase. This can then be used to predict a future breaking event;
Traffic-data including the state of level crossings on the route. Similar to the state of the traffic lights, the state of level crossings on the route and the time until the state changes may be used by a control unit to determine the state during which the agricultural vehicle will reach the level crossing. Considering this information, the control unit can accurately determine a future breaking event;
Map-data including bends, turns or corners along the route. This map-data may be retrieved from a database and can be considered as stored data, rather than live-data. In other words, the control unit may have access to a map of the route navigated by the agricultural machinery. Bends, turns or corners along the route, such as junctions and roundabouts, provide the control unit with ways of determining future changes in direction;
Map-data including the gradient of the ground surface along the route. The gradient of the ground surface may be derivable from stored data including any inclines and declines along the route. If the agricultural vehicle navigates a downhill section, the likelihood of a breaking event increases, and the control unit may use this information to change the position of the agricultural implement;
Map-data including traffic signs on the route. For example, stop signs along the route are parameters for a future breaking event. Other examples of traffic signs may include speed limits along the route that may result in future acceleration/deceleration events;
Vehicle-data associated with gear changes of the agricultural vehicle. In one embodiment, the control unit may receive a signal from a sensor if the operator changes gears on the agricultural vehicle. Such gear changes may be used detect present or future changes in speed;
Vehicle-data including the position and/or actuation of a brake pedal of the agricultural vehicle. Actuation of the brake pedal is a sign for a present deceleration event. Between initial actuation of the brake pedal and the actuation of the brakes, there is a typical time delay that may even be used by a control unit to predict an imminent, future braking event;
Vehicle-data including the position and/or actuation of a gas pedal of the agricultural vehicle. Actuation of the gas pedal is a sign for a present acceleration event;
Vehicle-data including the position and/or actuation of a clutch pedal of the agricultural vehicle. Although modern tractor may no longer be equipped with clutch pedal, some older and generally smaller models may still utilise a manually operated clutch. Immediately before a braking event, an operator may hastily depress the clutch pedal, which may be used by the control unit to predict an imminent braking event. Similarly, during acceleration, the operator may slowly release the clutch pedal, which may be used by the control unit to predict a future acceleration event.

Vehicle-data including the speed of the agricultural vehicle. It will be appreciated that any significant reduction/increase in speed may be used by the control unit to identify a present deceleration/acceleration event.

Vehicle-data including the inclination of the agricultural vehicle. If the agricultural vehicle navigates a downhill section, the likelihood of a breaking event increases, and the control unit may use this information to predict a future breaking event and change the position of the agricultural implement.

Vehicle-data including the location of the agricultural vehicle. The location of the agricultural vehicle, together with other parameters, such as some of the map-data described above, may be used by the control unit to predict future changes in the speed and direction of motion of the agricultural vehicle.

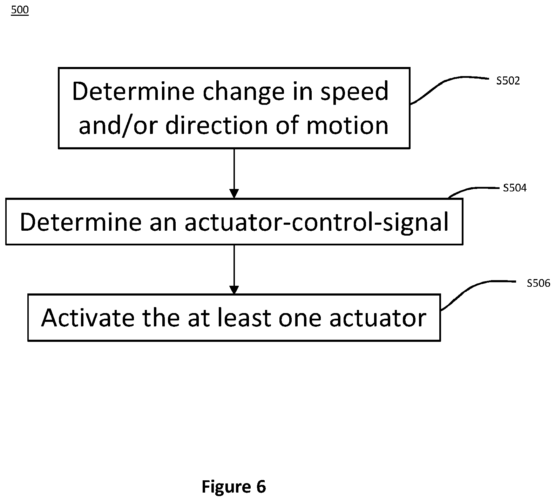

Turning to Figure 6, there is shown a method for controlling an agricultural machinery according to an embodiment of the present disclosure. The method 500 may be used to dampen or control movements of the agricultural implement, e.g. of the ground engaging tools, with respect to the agricultural vehicle. For example, if the agricultural machinery navigates public roads during transport between a work area and a garage, sudden changes in speed and/or direction may cause instability in the agricultural vehicle that may lead to increased wear of vehicle parts and/or discomfort to the operator. The method of the present disclosure may dampen or even prevent such effects from occurring.

In view of the above, the method 500 shown in Figure 6 includes a first step S502 for determining a change in the agricultural implement's speed and/or direction of motion. As mentioned above, the change in speed and/or direction may be detected as it occurs. In this case, the method may be considered as a re-active damping method. Alternatively, the change in speed and/or direction may be predicted before it occurs. The method may then be considered as a pro-active damping method.

If a present or future change in the agricultural implement's speed and/or direction of motion is determined, the method 500 includes a step S504 for determining a suitable actuator-control-signal. The actuator-control-signal may be calculated or looked-up in a database by a control-unit based on the determined present or future change in the agricultural implement's speed and/or direction of motion. In one example, a control unit may set the actuator-control-signal to a value for triggering a predetermined amount of movement of a suitable actuator. In the example of Figure 4, the control unit may be configured to set an actuator-control signal for the stone-trip actuators that will cause full extension as soon as the future breaking event is determined. Alternatively, in step S504, the control unit may calculate or look up a variable actuator-control-signal, based on the change determined in step S502. In other words, the magnitude of actuator movement caused by the actuator-control-signal may be dependent on the kind and amount of change determined in step S502.

In another step S506, the at least one actuator is operated on basis of the actuator-control-signal determined in step S504. Of course, the method, in step S504, may also activate a plurality of actuators depending on the kind of change detected. Actuation of the one or more actuators is effected to reduce the impact of the agricultural implement's inertia during the detected event.

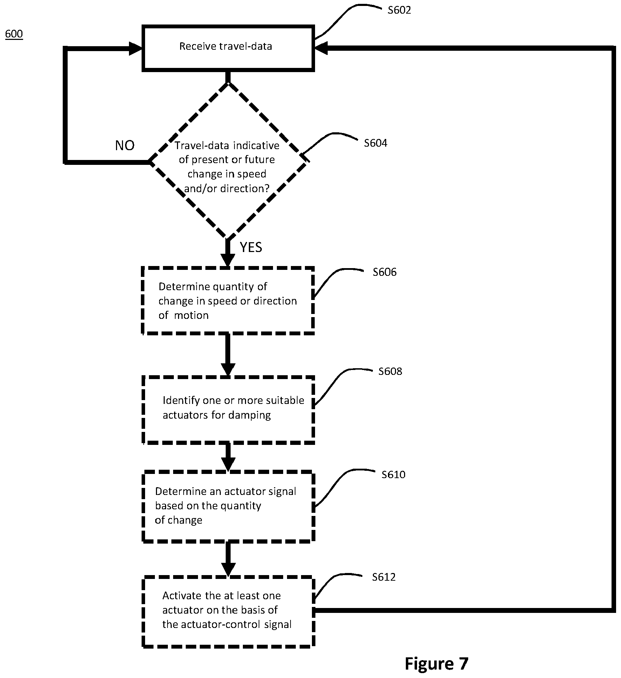

Figure 7 shows another embodiment of the method of the present disclosure. The method 600 shown in Figure 7 includes a first step S602 for receiving travel-data. Examples of travel-data received in step S602 are set out in detail above.

On the basis of the travel-data received, a present or future change of speed and/or direction of motion may be determined. If, in step S604, a change in speed and/or direction is detected or predicted, the method proceeds to step S606 for determining (e.g. calculating or predicting) a quantity of change in speed and/or direction of motion. For example, if the travel-data indicates that the speed of the agricultural vehicle is reducing, step S606 may include calculating the change quantity as a deceleration rate in m/s². Based on this quantity, it can be decided how large the impact of the change in motion will be, and which counter-measures shall be taken to dampen the impact. If the travel-data is not indicative of a current or future change in motion, the method may return to step S602.

The kind of change (e.g. acceleration, deceleration, cornering, etc.) will be used in a further step S608 to identify one or more actuators of the agricultural implement that are suitable for damping the impacts of the change in motion. In one example, the plough-width-adjustment actuator (e.g. actuator 70, Figure 1C) may be identified as being suitable to mitigate the momentum created by the agricultural implement during cornering (cf. Figure 5). It is, of course, feasible for more than one actuator to be suitable for damping a certain change in motion of the agricultural implement. In the above example, it may also be advantageous to change the lateral inclination of the main frame of the agricultural implement. Accordingly, the roll-over actuator may be used to lean the agricultural implement in the direction of the corner, much like a motorcyclist, particularly if the implement is arranged at a 90 degree angle with respect to the agricultural vehicle during transport (butterfly mode). In another example, a first-furrow-adjustment actuator, such as a lateral adjustment cylinder, may be used to side shift the entire plough implement with respect to the agricultural work vehicle, thereby moving the centre of gravity during or just before cornering. Depending on the quantity of change, it may be decided to actuate all or only some of the suitable actuators.

In another example of step S608, the plough-width-adjustment actuator may also be identified as a suitable damping device during breaking and/or accelerating events. Changing the furrow width (or plough width) by means of the plough-width-adjustment actuator will change the angle of the main frame and thus move the centre of gravity of the agricultural implement. Making the furrow width smaller will straighten out the main frame and move the centre of gravity further back from the agricultural work vehicle, thereby damping the forces created during a breaking event. Alternatively, in an acceleration event, making the furrow width wider by means of the plough-width-adjustment actuator will move the centre of gravity further towards the back of the agricultural work vehicle, thereby damping the forces created during an acceleration event. The angle of the main frame may be changed between 14-38 degrees relative to the direction of travel.

The quantity of change in speed and/or direction of the agricultural implement's motion will be used in another step S610 to determine an actuator-signal for damping the effect of the change in motion. In the above example, during or just before cornering, an actuator-signal for the lateral-width-adjustment actuator of the agricultural implement is determined (e.g. calculated or looked-up). The actuator-signal may include information regarding the kind of actuator to be moved and the magnitude of movement required.

In a last step S612, the method 600 will activate at least one of the suitable actuators to move the agricultural implement, i.e. the ground engaging members, with respect to the agricultural vehicle on basis of the actuator-control signal. In the example of hydraulic actuators, the method may include providing an electronic actuator-signal to a hydraulic system, which will in turn provide the hydraulic actuator with hydraulic fluid sufficient to effect the repositioning of the agricultural implement's ground engaging tools with respect to the agricultural vehicle. In the above example, the actuator-signal may cause the hydraulic system of the agricultural vehicle to provide the lateral-width-adjustment actuator with hydraulic fluid to pivot the main frame of the agricultural implement as required.

While the above has been described in relation to agricultural ploughs, it should be understood that the present disclosure is generally applicable to any agricultural machinery including one or more agricultural implements. Such agricultural implements may include cultivator implements, mower implements, tedder implements, seeder implements, and many others. The above may be particularly advantageous in connection with fully mounted implements.

The listing or discussion of an apparently prior-published document in this specification should not necessarily be taken as an acknowledgement that the document is part of the state of the art or is common general knowledge.

## Claims

1. A method for controlling an agricultural implement (310) in a transport position during transport, the agricultural implement comprising a plurality of implement tools (22a, 22b, 24a, 24b, 26a, 26b, 28a, 28b, 30a, 30b) and at least one actuator (70) for moving one or more of the plurality of implement tools, wherein the method comprises:
determining a present or future change in the agricultural implement's speed and/or direction of motion;
determining an actuator-control-signal based on the determination of a present or future change;
automatically activating an operation of the at least one actuator (70) for moving the one or more of the plurality of implement tools, if a present or future change in the agricultural implement's speed and/or direction is determined.

2. The method of Claim 1, wherein the at least one actuator is a hydraulic actuator.

3. The method of Claim 1 or 2, wherein the agricultural implement is a plough implement comprising a frame, and wherein the plurality of implement tools comprise a plurality of ground engaging tools, such as plough bodies, connected to the frame.

4. The method of Claim 3, wherein the at least one actuator is configured to move one or more of the plurality of plough bodies relative to the frame.

5. The method of Claim 3 or 4, wherein the at least one actuator is one or more of:
a plough-width-adjustment actuator for moving the plough bodies in a lateral direction;
a depth-adjustment actuator for adjusting the working depth of one or more of the plurality of plough bodies;
a stone-trip actuator for biasing the plurality of plough bodies into a predetermined working position;
a roll-over actuator for reversing the agricultural implement; and
a first-furrow-adjustment actuator.

6. The method of any of Claims 1 to 5, wherein determining the actuator-control-signal comprises:
determining a quantity of change in the agricultural implement's speed and/or direction of motion;
determining the actuator-control-signal based on the quantity of change.

7. The method of Claim 6, wherein the agricultural implement comprises a plurality of actuators for moving one or more of the plurality of implement tools, wherein determining the actuator-control-signal comprises:
identifying one or more of the plurality of actuators suitable for damping the movement of the agricultural implement on the basis of the change in the agricultural implement's speed and/or direction of motion;
for each of the identified actuators, determining an actuator-control-signal required to dampen the change in the agricultural implement's speed and/or direction of motion, on the basis of the quantity of change.

8. The method of any of Claims 1 to 7, wherein determining a present or future change in the agricultural implement's speed of motion or direction of motion comprises:
receiving travel-data associated with route parameters and/or operating parameters of an agricultural vehicle moving the agricultural implement;
determining a present or future change in the agricultural implement's speed and/or direction of motion on the basis of the travel-data.

9. The method of Claim 8, wherein at least a part of the travel-data comprises stored data obtained from a memory device, and/or wherein at least a part of the travel-data comprises live-data obtained from sensors.

10. The method of Claim 8 or 9, wherein the travel-data comprises vehicle-data associated with operational parameters of the agricultural vehicle.

11. The method of Claim 10, wherein the vehicle-data is indicative of one or more of:
travel speed of the agricultural vehicle;
inclination of the agricultural vehicle;
location of the agricultural vehicle;
gear changes of the agricultural vehicle;
position and/or actuation of a brake pedal of the agricultural vehicle;
position and/or actuation of a gas pedal of the agricultural vehicle;
position and/or actuation of a clutch pedal of the agricultural vehicle.

12. The method of any of Claims 8 to 11, wherein the travel-data comprises map-data associated with characteristics of a route along which the agricultural implement is being moved.

13. An agricultural implement (310) comprising:
a plurality of implement tools (22a, 22b, 24a, 24b, 26a, 26b, 28a, 28b, 30a, 30b);
at least one actuator (70) for moving one or more of the plurality of implement tools,
wherein the agricultural implement is associated with a control unit (202, 204) for controlling the agricultural implement in a transport position
during transport, the control unit configured to
determine a present or future change in the agricultural implement's speed and/or direction of motion;
determine an actuator-control-signal based on the determination of a present or future change;
activate the at least one actuator on the basis of the actuator-control-signal for moving the one or more of the plurality of implement tools, if a present or future change in the agricultural implement's speed and/or direction is determined.

14. The agricultural implement of Claim 13, wherein the agricultural implement is a fully-mounted agricultural implement.

15. An agricultural machinery comprising the agricultural implement of Claim 13 or 14 and an agricultural vehicle (307) for transporting the agricultural implement (310).

## Patentansprüche

1. Verfahren zum Steuern eines landwirtschaftlichen Arbeitsgeräts (310) in einer Transportposition während des Transports, wobei das landwirtschaftliche Arbeitsgerät eine Mehrzahl von Arbeitsgerätwerkzeugen (22a, 22b, 24a, 24b, 26a, 26b, 28a, 28b, 30a, 30b) und mindestens eine Betätigungseinrichtung (70) zum Bewegen einer oder mehrerer der Mehrzahl von Arbeitsgerätwerkzeugen aufweist, wobei das Verfahren folgende Schritte aufweist:
Bestimmen einer gegenwärtigen oder zukünftigen Veränderung in der Geschwindigkeit und/oder in der Bewegungsrichtung des landwirtschaftlichen Arbeitsgeräts;
Bestimmen eines Betätigungssteuersignals basierend auf dem Bestimmen einer gegenwärtigen oder zukünftigen Veränderung;
automatisches Aktivieren eines Betriebs von mindestens einer Betätigungseinrichtung (70) zum Bewegen des einen oder der mehreren der Mehrzahl von Arbeitsgerätwerkzeugen, wenn eine gegenwärtige oder zukünftige Veränderung in der Geschwindigkeit und/oder in der Richtung des landwirtschaftlichen Arbeitsgeräts bestimmt wird.

2. Verfahren nach Anspruch 1, wobei die mindestens eine Betätigungseinrichtung eine hydraulische Betätigungseinrichtung ist.

3. Verfahren nach Anspruch 1 oder 2, wobei das landwirtschaftliche Arbeitsgerät ein Pflugarbeitsgerät mit einem Rahmen ist und wobei die Mehrzahl von Arbeitsgerätwerkzeugen eine Mehrzahl von bodeneingreifenden Werkzeugen aufweist, wie zum Beispiel Pflugkörper, die mit dem Rahmen verbunden sind.

4. Verfahren nach Anspruch 3, wobei die mindestens eine Betätigungseinrichtung dazu eingerichtet ist, eine oder mehrere der Mehrzahl von Pflugkörpern relativ zu dem Rahmen zu bewegen.

5. Verfahren nach Anspruch 3 oder 4, wobei die mindestens eine Betätigungseinrichtung eine oder mehrere der folgenden Einrichtungen ist:
eine Pflugbreitenverstellungs-Betätigungseinrichtung zum Bewegen der Pflugkörper in einer lateralen Richtung;
eine Tiefenverstellungs-Betätigungseinrichtung zum Verstellen der Arbeitstiefe eines oder mehrerer der Mehrzahl von Pflugkörpern;
eine Steinrückzugs-Betätigungseinrichtung zum Vorspannen der Mehrzahl von Pflugkörper in eine vorbestimmten Arbeitsposition;
eine Umkehr-Betätigungseinrichtung zum Umkehren des landwirtschaftlichen Arbeitsgeräts; und
eine Verstell-Betätigungseinrichtung der ersten Pflugfurche.

6. Verfahren nach einem der Ansprüche 1 bis 5, wobei das Bestimmen des Betätigungseinrichtungssteuersignals folgende Schritte aufweist:
Bestimmen einer Anzahl von Veränderungen in der Geschwindigkeit und/oder in der Bewegungsrichtung des landwirtschaftlichen Arbeitsgeräts;
Bestimmen des Betätigungseinrichtungssteuersignals basierend auf der Anzahl der Veränderungen.

7. Verfahren nach Anspruch 6, wobei das landwirtschaftliche Arbeitsgerät eine Mehrzahl von Betätigungseinrichtungen zum Bewegen einer oder mehrerer der Mehrzahl von Arbeitsgerätewerkzeugen aufweist, wobei das Bestimmen des Betätigungseinrichtungssteuersignals aufweist:
Identifizieren einer oder mehrerer der Mehrzahl von Betätigungseinrichtungen, die zum Dämpfen der Bewegung des landwirtschaftlichen Arbeitsgeräts geeignet sind, auf der Basis der Veränderung in der Geschwindigkeit und/oder in der Bewegungsrichtung des landwirtschaftlichen Arbeitsgeräts;
für jede der identifizierten Betätigungseinrichtungen, Bestimmen eines Betätigungseinrichtungssignals, das erforderlich ist, um die Veränderung in der Geschwindigkeit und/oder in der Bewegungsrichtung des landwirtschaftlichen Arbeitsgeräts auf Basis der Anzahl von Veränderungen zu dämpfen.

8. Verfahren nach einem der Ansprüche 1 bis 7, wobei das Bestimmen einer gegenwärtigen oder zukünftigen Veränderung in der Geschwindigkeit oder in der Bewegungsrichtung des landwirtschaftlichen Arbeitsgeräts aufweist:
Empfangen von Bewegungsdaten, die zugehörig zu Routen-Parametern und/oder Betriebsparametern eines landwirtschaftlichen Fahrzeugs sind, das das landwirtschaftliche Arbeitsgerät bewegt;
Bestimmen einer gegenwärtigen oder zukünftigen Veränderung in der Geschwindigkeit und/oder in der Bewegungsrichtung des landwirtschaftlichen Arbeitsgeräts auf Basis der Bewegungsdaten.

9. Verfahren nach Anspruch 8, wobei mindestens ein Teil der Bewegungsdaten gespeicherte Daten aufweist, die von einer Speichereinrichtung stammen und/oder wobei mindestens ein Teil der Bewegungsdaten Echtzeit-Daten aufweist, die von Sensoren stammen.

10. Verfahren nach Anspruch 8 oder 9, wobei die Bewegungsdaten Fahrzeugdaten aufweisen, die zugehörig zu Betriebsparametern des landwirtschaftlichen Fahrzeugs sind.

11. Verfahren nach Anspruch 10, wobei die Fahrzeugdaten kennzeichnend für eine oder mehrere der folgenden Daten sind:
Bewegungsgeschwindigkeit des landwirtschaftlichen Fahrzeugs;
Neigungswinkel des landwirtschaftlichen Fahrzeugs;
Standort des landwirtschaftlichen Fahrzeugs;
Gangwechsel des landwirtschaftlichen Fahrzeugs;
Position und/oder Betätigung eines Bremspedals des landwirtschaftlichen Fahrzeugs;
Position und/oder Betätigung eines Gaspedals des landwirtschaftlichen Fahrzeugs;
Position und/oder Betätigung eines Kupplungspedals des landwirtschaftlichen Fahrzeugs.

12. Verfahren nach einem der Ansprüche 8 bis 11, wobei die Bewegungsdaten Kartendaten aufweisen, die zu Routen-Merkmalen einer Route gehören, entlang der das landwirtschaftliche Arbeitsgerät bewegt wird.

13. Landwirtschaftliches Arbeitsgerät (310) mit:
einer Mehrzahl von Arbeitsgerätwerkzeugen (22a, 22b, 24a, 24b, 26a, 26b, 28a, 28b, 30a, 30b);
mindestens einer Betätigungseinrichtung (70) zum Bewegen einer oder mehrerer der Mehrzahl von Arbeitsgerätwerkzeugen, wobei die landwirtschaftliche Arbeitsgerät zu einer Steuereinheit (202, 204) zum Steuern des landwirtschaftlichen Arbeitsgeräts in einer Transportposition während des Transports gehört, wobei die Steuereinheit eingerichtet ist, zum:
Bestimmen einer gegenwärtigen oder zukünftigen Veränderung in der Geschwindigkeit und/oder in der Bewegungsrichtung des landwirtschaftlichen Arbeitsgeräts;
Bestimmen eines Betätigungseinrichtungssteuersignals basierend auf dem Bestimmen einer gegenwärtigen oder zukünftigen Veränderung;
Aktivieren der mindestens einen Betätigungseinrichtung auf der Basis des Betätigungseinrichtungssignals zum Bewegen des einen oder der mehreren der Mehrzahl von Arbeitsgerätwerkzeugen, wenn eine gegenwärtige oder zukünftige Veränderung in der Geschwindigkeit und/oder in der Bewegungsrichtung des landwirtschaftlichen Arbeitsgeräts bestimmt wird.

14. Landwirtschaftliches Arbeitsgerät nach Anspruch 13, wobei das landwirtschaftliche Arbeitsgerät ein vollständig befestigtes landwirtschaftliches Arbeitsgerät ist.

15. Landwirtschaftliche Maschine mit dem landwirtschaftlichen Arbeitsgerät nach Anspruch 13 oder 14 und einem landwirtschaftlichen Fahrzeug (307) zum Transportieren des landwirtschaftlichen Arbeitsgeräts (310).

## Revendications

1. Procédé de commande d'un outil agricole (310) en position de transport pendant le transport, l'outil agricole comprenant une pluralité d'outils (22a, 22b, 24a, 24b, 26a, 26b, 28a, 28b, 30a, 30b) et au moins un actionneur (70) pour déplacer un ou plusieurs outils, dans lequel le procédé comprend :
la détermination d'un changement présent ou futur de la vitesse et/ou de la direction du mouvement de l'outil agricole ;
la détermination d'un signal de commande de l'actionneur en fonction de la détermination d'un changement présent ou futur;
l'activation automatique d'une commande de l'au moins un actionneur (70) pour déplacer l'un ou plusieurs de la pluralité d'outils, si un changement présent ou futur de la vitesse et/ou de la direction de l'outil agricole est déterminé.

2. Procédé selon la revendication 1, dans lequel l'au moins un actionneur est un actionneur hydraulique.

3. Procédé selon la revendication 1 ou 2, dans lequel l'outil agricole est un outil de charrue comprenant un châssis, et dans lequel la pluralité d'outils comprend une pluralité d'outils en prise avec le sol, tels que les corps de charrue, reliés au châssis.

4. Procédé selon la revendication 3, dans lequel au moins un actionneur est configuré pour déplacer un ou plusieurs corps de charrue par rapport au châssis.

5. Procédé selon la revendication 3 ou 4, dans lequel au moins un actionneur est un ou plusieurs parmi :
un actionneur de réglage de largeur de charrue pour déplacer les corps de charrue en direction latérale ;
un actionneur de réglage de profondeur pour le réglage de la profondeur de travail d'un ou d'une pluralité de corps de charrue ;
un actionneur de détection de pierre pour incliner la pluralité de corps de charrue dans une position de travail prédéterminée ;
un actionneur de retournement pour l'inversion de l'outil agricole ; et
un actionneur de réglage de premier sillon.

6. Procédé selon l'une quelconque des revendications 1 à 5, dans lequel la détermination du signal de commande de l'actionneur comprend :
la détermination d'un degré de changement de la vitesse et/ou de la direction du mouvement de l'outil agricole ;
la détermination d'un signal de commande de l'actionneur en fonction du degré de changement.

7. Procédé selon la revendication 6, dans lequel l'outil agricole comprend une pluralité d'actionneurs permettant de déplacer un ou plusieurs de la pluralité d'outils, dans lequel la détermination du signal de commande de l'actionneur comprend :
l'identification d'un ou plusieurs de la pluralité d'actionneurs adaptés à amortir le mouvement de l'outil agricole en fonction du changement de la vitesse et/ou de la direction du mouvement de l'outil agricole ;
la détermination, pour chacun des actionneurs identifiés, d'un signal de commande de l'actionneur nécessaire pour amortir le changement de vitesse et/ou de sens de déplacement de l'outil agricole, en fonction du degré de changement.

8. Procédé selon l'une quelconque des revendications 1 à 7, dans lequel la détermination d'un changement présent ou futur de la vitesse de déplacement ou de la direction de déplacement de l'outil agricole comprend :
la réception des données de déplacement associées aux paramètres de trajet et/ou de fonctionnement d'un véhicule agricole qui déplace l'outil agricole ;
la détermination d'un changement présent ou futur de la vitesse et/ou de la direction de déplacement de l'outil agricole en fonction des données de déplacement.

9. Procédé selon la revendication 8, dans lequel au moins une partie des données de déplacement comprend des données stockées obtenues à partir d'un dispositif à mémoire, et/ou dans lequel au moins une partie des données de déplacement comprend des données en temps réel obtenues à partir de capteurs.

10. Procédé selon la revendication 8 ou 9, dans lequel les données de déplacement comprennent les données de véhicule associées aux paramètres opérationnels du véhicule agricole.

11. Procédé selon la revendication 10, dans lequel les données de véhicule sont indicatives d'une ou plusieurs données parmi :
la vitesse de déplacement du véhicule agricole ;
l'inclinaison du véhicule agricole ;
l'emplacement du véhicule agricole ;
les changements de vitesse du véhicule agricole ;
la position et/ou l'actionnement d'une pédale de frein du véhicule agricole ;
la position et/ou l'actionnement d'une pédale d'accélération du véhicule agricole ;
la position et/ou l'actionnement d'une pédale d'embrayage du véhicule agricole.

12. Procédé selon l'une quelconque des revendications 8 à 11, dans lequel les données de déplacement comprennent des données cartographiques associées aux caractéristiques d'un trajet le long duquel l'outil agricole est déplacé.

13. Outil agricole (310) comprenant :
une pluralité d'outils (22a, 22b, 24a, 24b, 26a, 26b, 28a, 28b, 30a, 30b) ;
au moins un actionneur (70) permettant de déplacer un ou plusieurs outils, dans lequel l'outil agricole est associé à une unité de commande (202, 204) permettant de commander l'outil agricole en position de transport pendant le transport, l'unité de commande étant configurée pour
déterminer un changement présent ou futur de la vitesse et/ou de la direction du mouvement de l'outil agricole ;
déterminer un signal de commande de l'actionneur en fonction de la détermination d'un changement présent ou futur;
activer l'au moins un actionneur en fonction du signal de commande de l'actionneur pour déplacer un ou plusieurs de la pluralité d'outils, si un changement présent ou futur de la vitesse et/ou de direction de l'outil agricole est déterminé.

14. Outil agricole selon la revendication 13, dans lequel l'outil agricole est un outil agricole entièrement monté.

15. Machine agricole comprenant l'outil agricole selon la revendication 13 ou 14 et véhicule agricole (307) pour le transport de l'outil agricole (310).
